# EUROPÄISCHE PATENTANMELDUNG

(11) **EP 4 592 618 A1**
(43) Veröffentlichungstag der Anmeldung: **30.07.2025**
(21) Anmeldenummer: 24154096.2
(22) Anmeldetag: 26.01.2024
(51) Int. Cl.: F25B 6/04, F25B 9/00

(54) **PRÜFKAMMER UND VERFAHREN ZUR STEUERUNG**

(71) Anmelder: Weiss Technik GmbH, 35447 Reiskirchen (DE)
(72) Erfinder: TEICHMANN, Johannes, 72351 Geislingen (DE); HECKELE, Tobias, 72336 Balingen (DE)
(74) Vertreter: advotec.

(57) **Zusammenfassung**

Die Erfindung betrifft eine Prüfkammer sowie ein Verfahren zur Konditionierung von Luft in einem gegenüber einer Umgebung verschließbaren und temperaturgedämmten Prüfraum (17) der Prüfkammer, insbesondere Klimakammer, zur Aufnahme von Prüfgut, wobei mittels eine Kühleinrichtung (11) einer Temperiervorrichtung (10) der Prüfkammer, mit einem ersten Kühlkreislauf (12) mit einem ersten Kältemittel, einem Wärmeübertrager (13) im Prüfraum, einem Verdichter (14), einem Gaskühler (15), einem Kaskaden-Wärmeübertrager (20) und einem Expansionsventil (16) eine Temperatur in einem Temperaturbereich von - 20° C bis + 150 °C innerhalb des Prüfraums ausgebildet wird, wobei der Kaskaden-Wärmeübertrager an einer Hochdruckseite (18) des ersten Kühlkreislaufs angeschlossen ist, wobei der Kaskaden-Wärmeübertrager mit einem zweiten Kühlkreislauf (21) der Kühleinrichtung gekoppelt ist, wobei die Temperatur in dem Prüfraum mittels einer Steuervorrichtung der Prüfkammer gesteuert und/oder geregelt wird, wobei das erste Kältemittel ein unfluoriertes Kältemittel, bevorzugt reines Kohlenstoffdioxid, ist, wobei der zweite Kühlkreislauf eine Pumpe und eine Flüssigkeit als ein Wärmeträgermedium umfasst, wobei die Temperatur innerhalb des Prüfraums ausgebildet wird.

## Beschreibung

Die Erfindung betrifft eine Prüfkammer sowie ein Verfahren zur Konditionierung von Luft in einem gegenüber einer Umgebung verschließbaren und temperaturisolierten Prüfraum der Prüfkammer, insbesondere Klimakammer, zur Aufnahme von Prüfgut, wobei mittels einer Kühleinrichtung einer Temperiervorrichtung der Prüfkammer, mit einem ersten Kühlkreislauf mit einem ersten Kältemittel, einem Wärmeübertrager im Prüfraum, einem Verdichter, einem Gaskühler, einem Kaskaden-Wärmeübertrager und einem Expansionsventil eine Temperatur in einem Temperaturbereich von -20°C bis +150°C innerhalb des Prüfraums ausgebildet wird, wobei der Kaskaden-Wärmeübertrager an einer Hochdruckseite des ersten Kühlkreislaufs angeschlossen ist, wobei der Kaskaden-Wärmeübertrager mit einem zweiten Kühlkreislauf der Kühleinrichtung gekoppelt ist, wobei die Temperatur im dem Prüfraum mittels einer Steuervorrichtung der Prüfkammer gesteuert und/oder geregelt wird.

Derartige Prüfkammern werden regelmäßig zur Überprüfung von physikalischen und/oder chemischen Eigenschaften von Gegenständen, insbesondere Vorrichtungen eingesetzt. So sind Temperaturprüfschränke oder Klimaprüfschränke bekannt, innerhalb derer Temperaturen in einem Bereich von -50°C bis +150°C eingestellt werden können. Bei Klimaprüfschränken können ergänzend gewünschte Klimabedingungen eingestellt werden, denen dann die Vorrichtung bzw. das Prüfgut über einen definierten Zeitraum ausgesetzt wird. Eine Temperierung eines das zu prüfende Prüfgut aufnehmendem Prüfraums erfolgt regelmäßig in einem Umluftkanal innerhalb des Prüfraums. Der Umluftkanal bildet einen Luftbehandlungsraum im Prüfraum aus, in dem Wärmetauscher zur Erwärmung oder Kühlung der den Umluftkanal bzw. den Prüfraum durchströmenden Luft angeordnet sind. Dabei saugt ein Lüfter bzw. ein Ventilator die im Prüfraum befindliche Luft an und leitet sie im Umluftkanal zu den jeweiligen Wärmetauschern. Das Prüfgut kann so temperiert oder auch einem definierten Temperaturwechsel ausgesetzt werden. Während eines Prüfinterwalls kann dann beispielsweise eine Temperatur zwischen einem Temperaturmaximum und einem Temperaturminimum der Prüfkammer wechseln. Eine derartige Prüfkammer ist beispielweise aus der EP 0 344 397 A2 bekannt.

Um mit derartigen Kühleinrichtungen den hohen Anforderungen an eine Temperaturregelung innerhalb des Temperaturbereichs des Prüfraums gerecht zu werden, und um Schwankungen in einer Lastanforderung zu vermeiden, kann die Kühleinrichtung auch in Art einer zweistufigen Kälteanlage ausgebildet sein. Bei einer zweistufigen Kälteanlage ist ein erster Kühlkreislauf und zweiter Kühlkreislauf jeweils über einen gemeinsamen Kaskaden-Wärmeübertrager gekoppelt bzw. angeschlossen, wobei ein Wärmeübertrager des ersten Kühlkreislaufs in einem Prüfraum der Prüfkammer zur Temperierung dient. Der zweite Kühlkreislauf wird bei hohen Kühllastanforderung zur Kühlung bzw. Verflüssigung des Kältemittels des ersten Kühlkreislaufs eingesetzt.

Das in einem Kühlkreislauf eingesetzte Kältemittel sollte ein relatives geringes CO2-Äquivalent aufweisen, d.h. ein relatives Treibhauspotenzial oder auch Global Warming Potential (GWP) sollte möglichst gering sein, um eine indirekte Schädigung der Umwelt durch das Kältemittel bei Freisetzung zur vermeiden. Infolge gesetzlicher Bestimmungen darf ein Kältemittel nicht wesentlich zum Ozonabbau in der Atmosphäre oder der globalen Erwärmung beitragen.

Es ist auch bekannt, Kohlenwasserstoffe als Kältemittel zu verwenden, wobei jedoch nachteilig ist, dass Kohlenwasserstoffe leicht brennbar sind. Unter Brennbarkeit wird hier die Eigenschaft des Kältemittels verstanden, mit Umgebungssauerstoff unter Freisetzung von Wärme zu reagieren. Ein Kältemittel ist insbesondere dann brennbar, wenn es in die Brandklasse C nach der europäischen Norm DN 2 bzw. der DIN 378 Klassen A2, A2L und A3 in der zuletzt am Prioritätstag gültigen Fassung fällt.

So sollen im Wesentlichen keine fluorierten Gase oder fluorierten Stoffe als Kältemittel eingesetzt werden, weshalb natürliche Kältemittel, beispielsweise Kohlenstoffdioxid (CO2) in Frage kommen. Nachteilig bei derartigen Kältemitteln mit geringen GWP ist, dass diese Kältemittel in den für einen Kühlkreislauf relevanten Temperaturbereichen eine teilweise deutlich verringerte Kälteleistung im Vergleich zu Kältemitteln mit vergleichsweise größeren GWP aufweisen. Mit Kältemittelgemischen, die einen vergleichsweise hohen Masseanteil an Kohlendioxid aufweisen, kann ein niedriger GWP erzielt werden, wobei diese Kältemittelgemische aufgrund der unterschiedlichen, miteinander gemischten Stoffe, zeotrope Eigenschaften aufweisen, was wiederum bei vielen Kühlkreisläufen unerwünscht ist. Darüber hinaus muss ein Anteil an Kohlenstoffdioxid so groß sein, dass das Kältemittel nicht brennbar ist. So ist der aus der WO 2019/048250 A1 eine Prüfkammer mit einem Kältemittel bekannt, welches im Wesentlichen aus Kohlenstoffdioxid, Pentafluorethan und Difluormethan besteht. Nachteilig ist hier, dass zur Erzielung besonders tiefer Temperaturen eine Unterkühlung des Kältemittels mittels eines internen Wärmeübertragers in einem Kühlkreislauf erforderlich ist. Weiter hat das Kältemittel zeotrope Eigenschaften und enthält als Komponenten fluorierte Gase.

Aufgrund der sehr hohen Kälteleistung von Kohlstoffdioxid besteht das Problem, dass klimatische Prüfungen nur eingeschränkt durchgeführt werden können. Hier muss eine definierte relative Luftfeuchtigkeit und Temperatur in dem Prüfraum ausgebildet werden. Dies erfordert unter anderem auch eine Entfeuchtung der Luft in dem Prüfraum, wenn beispielsweise während eines Prüfzyklus die Luft in dem Prüfraum abgekühlt wird. Beim Abkühlen der Luft ist ein Niederschlag von Kondensat an den Wärmeübertrager, insbesondere aufgrund der hohen Kälteleistung, nur schwer kontrollierbar, sodass es zu einer ungewollten Entfeuchtung der Luft im Prüfraum kommen kann. Weiter kann auch eine Entfeuchtung zu gering sein, wenn beispielsweise im Rahmen eines Prüfzyklus ein nur sehr langsamer, definierter Temperaturwechsel vorgesehen ist. Mit einer derartigen Kühleinrichtung ist daher ein klimatischer Prüfzyklus nicht immer mit zufriedenstellender Genauigkeit durchzuführen.

Der vorliegenden Erfindung liegt daher die Aufgabe zugrunde, ein Verfahren zur Konditionierung von Luft in einem Prüfraum einer Prüfkammer sowie eine Prüfkammer vorzuschlagen, das bzw. die umweltfreundlich ist und eine effiziente Durchführung von klimatischen Prüfungen ermöglicht.

Diese Aufgabe wird durch ein Verfahren mit den Merkmalen des Anspruchs 1, eine Prüfkammer mit den Merkmalen des Anspruchs 16 und ein System mit den Merkmalen des Anspruchs 21 gelöst.

Bei dem erfindungsgemäßen Verfahren zur Konditionierung von Luft in einem gegenüber einer Umgebung verschließbaren und temperaturisolierten bzw. temperaturgedämmten Prüfraum einer Prüfkammer, insbesondere Klimakammer, zur Aufnahme von Prüfgut, wird mittels einer Kühleinrichtung einer Temperiervorrichtung der Prüfkammer, mit einem ersten Kühlkreislauf mit einem ersten Kältemittel, einem Wärmeübertrager im Prüfraum, einem Verdichter, einem Gaskühler, einem Kaskaden-Wärmeübetrager und einem Expansionventil eine Temperatur in einem Temperaturbereich von -20°C bis +150°C innerhalb des Prüfraums ausgebildet, wobei der Kaskaden-Wärmeübertrager an einer Hochdruckseite des ersten Kühlkreislaufs angeschlossen ist, wobei der Kaskaden-Wärmeübertrager mit einem zweiten Kühlkreislauf der Kühleinrichtung gekoppelt ist, wobei die Temperatur in dem Prüfraum mittels einer Steuervorrichtung der Prüfkammer gesteuert und/oder geregelt wird, wobei das erste Kältemittel ein unfluoriertes Kältemitteln, bevorzugt reines Kohlenstoffdioxid, ist, wobei der zweite Kühlkreislauf eine Pumpe und eine Flüssigkeit als ein Wärmeträgermedium umfasst, wobei die Temperatur innerhalb des Prüfraums ausgebildet wird.

Erfindungsgemäß ist die Kühleinrichtung dann in Art einer zumindest zweitstufigen Kälteanlage ausgebildet, wobei jedoch anstelle eines zweiten Kältemittels in dem zweiten Kühlkreislauf das Wärmeträgermedium und anstelle eines Verdichters die Pumpe Verwendung finden. Prinzipiell ist dabei vorgesehen, dass das Wärmeträgermedium mittels der Pumpe in dem zweiten Kühlkreislauf zirkuliert wird. Das Wärmeträgermedium durchströmt dabei auch den Kaskaden-Wärmeübertrager, der von dem ersten Kältemittel durchströmt wird. An dem Kaskaden-Wärmeübertrager erfolgt dann eine Kühlung bzw. Enthitzung des ersten Kältemittels, so dass eine am Kaskaden-Wärmeübertrager anfallende Wärmeenergie von dem zweiten Kühlkreislauf abgeführt und das derart gekühlte erste Kältemittel zum Wärmeübertrager im Prüfraum geleitet werden kann. So erfolgt die Kühlung des Wärmeübertragers und damit ein Abtransport von im Prüfraum am Wärmeübertrager anfallender Wärmeenergie über den ersten Kühlkreislauf, welcher mit dem ersten Kältemittel betrieben wird, das ein unfluoriertes Kältemittel, bevorzugt reines Kohlenstoffdioxid, ist. Reines Kohlenstoffdioxid weist ein GWP von 1 auf, ist nicht brennbar, ungefährlich und kostengünstig erhältlich. Darüber hinaus ist Kohlenstoffdioxid ein Reinstoff bzw. azeotrop, was die vorteilhafte Durchführung des Verfahrens in dessen Varianten überhaupt erst ermöglicht. Gleichfalls ist es möglich über das Wärmeträgermedium des zweiten Kühlkreislaufs vergleichsweise temperaturstabil eine Verflüssigung des ersten Kältemittels im Kaskaden-Wärmeübertrager sicherzustellen. Darüber hinaus kann der zweite Kühlkreislauf besonders einfach und kostengünstig ausgebildet werden, da lediglich eine Pumpe zur Zirkulation des Wärmeträgermediums benötigt wird. Eine derartige Pumpe ist gegenüber einem Verdichter bei einer hohen Anzahl von Schaltzyklen vergleichsweise weniger empfindlich, so dass der zweite Kühlkreislauf bedarfsgerecht und mit einem vergleichsweise geringen Energieverbrauch betrieben werden kann. Weiter kann die Pumpe gegenüber dem Verdichter vergleichsweise leise betrieben werden, wodurch unerwünschte Schallemissionen verringert werden können. Insgesamt ermöglicht das Verfahren zum Betrieb der Prüfkammer somit einen umweltfreundlichen und gefahrlosen Betrieb der Prüfkammer sowie eine einfache Anpassung der Kühleinrichtung an unterschiedlichste Betriebsanforderungen bei gleichzeitig geringem Energieverbrauch.

So kann das Wärmeträgermedium in dem zweiten Kühlkreislauf ohne Phasenwechsel zirkuliert werden. Ein Druck des Wärmeträgermediums in dem zweiten Kühlkreislauf, von beispielsweise etwa 1 MPa, kann zwischen einem Vorlauf und einem Rücklauf des zweiten Kühlkreislaufs mit einer vergleichsweise geringen Druckdifferenz, beispielsweise 10 bis 50 kPa, ausgebildet sein. Die Druckdifferenz kann durch einen Strömungswiderstand und/oder eine Wärmedehnung in dem zweiten Kühlkreislauf variieren. Als Wärmeträgermedium kann beispielsweise Sole, Öl, oder eine andere geeignete Flüssigkeit verwendet werden.

Der zweite Kühlkreislauf kann zwischen einem Vorlauf und einem Rücklauf des zweiten Kühlkreislaufs eine Ventileinrichtung, vorzugsweise ein Drei-Wege-Ventil, aufweisen, welches den Kaskaden-Wärmeübertrager überbrückt, wobei eine Regeleinrichtung der Steuervorrichtung einen Massenstrom an Wärmeträgermedium durch den Kaskaden-Wärmeübertrager mittels der Ventileinrichtung regeln kann. Alternativ kann die Ventileinrichtung auch aus einer Anzahl von Magnetventilen ausgebildet sein, die von der Steuervorrichtung gesteuert werden und über die ein Durchfluss vom Wärmeträgermedium geregelt werden kann. Wenn die Ventileinrichtung mit einem Drei-Wege-Ventil ausgebildet ist, kann dieses in dem zweiten Kühlkreislauf in Strömungsrichtung nachfolgend dem Kaskaden-Wärmeübertrager und vor der Pumpe angeordnet sein. Dabei kann dann der Vorlauf, ausgehend von der Pumpe in Strömungsrichtung des Wärmeträgermedium zu dem Kaskaden-Wärmeübertrager, an das Drei-Wege-Ventil angeschlossen sein. Mittels des Drei-Wege-Ventils kann eine optimale Beaufschlagung des Kaskaden-Wärmeübertrager mit dem Wärmeträgermedium erfolgen, wodurch eine sehr hohe Regelgenauigkeit erzielt werden kann, da es zu keinem kompletten Schließen des Drei-Wege-Ventils kommen muss. Beispielsweise kann das Drei-Wege-Ventil über einen Motor, einen Schrittmotor oder andere Stellglieder einfach angesteuert werden, und so ein Verhältnis eines Volumenstroms bzw. Massenstroms zwischen dem Vorlauf und dem Rücklauf über das Drei-Wege-Ventil und zwischen dem Vorlauf und dem Rücklauf über den Kaskaden-Wärmeübertrager je nach Betriebsanforderung optimal angepasst werden.

In dem zweiten Kühlkreislauf kann ein Flüssigkeitsbypass zwischen einem Vorlauf und einem Rücklauf des zweiten Kühlkreislaufs ausgebildet sein, wobei der Flüssigkeitsbypass über den Wärmeübertrager verlaufen kann, wobei die Temperatur in dem Prüfraum mit dem ersten Kühlkreislauf und/oder dem zweiten Kühlkreislauf ausgebildet werden kann. Der Flüssigkeitsbypass verläuft dann folglich durch den Prüfraum bzw. den darin angeordneten Wärmeübertrager, so dass mit dem Flüssigkeitsbypass des zweiten Kühlkreislaufs ebenfalls Einfluss auf die Temperatur in dem Prüfraum genommen werden kann. Je nach der im Prüfraum auszubildenden Temperatur kann der zweite Kühlkreislauf mit dem Flüssigkeitsbypass betrieben werden, beispielsweise wenn eine vergleichsweise hohe Temperatur, beispielsweise -10°C, möglichst konstant ausgebildet werden soll. Wahlweise kann auch alleine der erste Kühlkreislauf betrieben werden, wenn ein schneller Temperaturwechsel erforderlich ist. Auch kann der erste Kühlkreislauf und der zweite Kühlkreislauf, mit oder ohne den Flüssigkeitsbypass, gleichzeitig betrieben werden, wenn besonders niedrige Temperaturen im Prüfraum eingestellt werden sollen. Dabei kann dann auch vorgesehen sein, dass der Flüssigkeitsbypass, zumindest innerhalb geeigneter Temperaturbereiche, genutzt wird. Ein Wechsel in einem Betrieb des ersten Kühlkreislaufs und des zweiten Kühlkreislaufs erfordert eine besonders genaue Regelung, damit es nicht zu unerwünschten Änderung einer Temperatur im Prüfraum infolge des Wechsels kommt.

Der Flüssigkeitsbypass kann zwischen einem Vorlauf und einem Rücklauf des Flüssigkeitsbypasses eine Bypass-Ventileinrichtung, vorzugsweise ein Bypass-Drei-Wege-Ventil, aufweisen, welches den Wärmeübertrager überbrücken kann, wobei eine Regeleinrichtung der Steuervorrichtung einen Massenstrom am Wärmeträgermedium durch den Wärmeübertrager mittels der Bypass-Ventileinrichtung regeln kann. Die Bypass-Ventileinrichtung kann durch eine Anzahl von Magnetventilen oder beispielsweise ein Drei-Wege-Ventil gebildet sein. Der Flüssigkeitsbypass kann in Strömungsrichtung des Wärmeträgermediums in dem Vorlauf nachfolgend der Pumpe und vor dem Kaskaden-Wärmeübertrager und in dem Rücklauf nachfolgend dem Kaskaden-Wärmeübertrager und vor der Pumpe angeschlossen sein. Wenn die Bypass-Ventileinrichtung durch ein Bypass-Drei-Wege-Ventil ausgebildet ist, kann das Bypass-Drei-Wege-Ventil in dem Vorlauf oder dem Rücklauf des Flüssigkeitsbypasses angeordnet sein. Dabei kann eine Leitungsverbindung von dem Vorlauf zu dem Rücklauf zu oder von dem Bypass-Drei-Wege-Ventil vorgesehen sein, mit der der Wärmeübertrager überbrückt werden kann. Die Bypass-Ventileinrichtung kann nun dazu genutzt werden, eine Versorgung des Wärmeübertragers mit Wärmeträgermedium bzw. einen Massenstrom des Wärmeträgermediums durch den Wärmeübertrager zu regeln. Hierdurch wird eine besonders genaue Temperaturregelung einer Temperatur in dem Prüfraum möglich.

In dem Flüssigkeitsbypass kann eine weitere Pumpe angeordnet sein, mittels der das Wärmeträgermedium gefördert werden kann. Die weitere Pumpe kann in dem Vorlauf oder dem Rücklauf des Flüssigkeitsbypasses angeordnet sein. So wird es möglich, eine noch weiter verbesserte Temperaturregelung auszuführen, da mit der weiteren Pumpe ein kontinuierlicher Massenstrom am Wärmeträgermedium ausgebildet werden kann, der mittels der Bypass-Ventileinrichtung einfach gedrosselt werden kann. Eventuelle hydraulische Ungleichmäßigkeiten innerhalb des zweiten Kühlkreislaufs können so vermieden werden.

Das Expansionsorgan und/oder ein Drei-Wege-Ventil kann mit jeweils einem PID-Regler einer Regeleinrichtung der Steuervorrichtung nach einer Temperatur im Prüfraum als Führungsgröße geregelt werden. Prinzipiell ist es auch möglich andere geeignete Regler zu verwenden. Insbesondere kann jedes der genannten Ventile bzw. Drosselorgane mit einem eigens dafür vorgesehenen Regler der Regeleinrichtung geregelt werden. Die Regeleinrichtung kann dabei so beschaffen sein, dass die jeweiligen Regler in einer Kaskaden-Regelung der Regeleinrichtung zusammengefasst sind. Eine Ansteuerung dieser Ventile kann mittels geeigneter Stellglieder, beispielsweise einen Schrittmotor, erfolgen. Die Kaskaden-Regelung kann dann nach einer Temperatur im Prüfraum, welche von der Steuervorrichtung vorgegeben werden kann, als Führungsgröße regeln.

Die Steuervorrichtung kann zumindest bei einer Temperatur > 0°C im Prüfraum als Führungsgröße die Pumpe und bei einer Temperatur < 0°C den Verdichter betreiben. In dem Wärmeträgermedium kann in einem Vorlauf des zweiten Kühlkreislaufs eine Temperatur von beispielsweise - 20°C bis 0°C erreicht werden. Der zweite Kühlkreislauf eignet daher besonders gut, wenn konstante Temperaturen < 0°C oder Temperaturänderungen mit kleinen Gradienten im Prüfraum ausgebildet werden sollen. Für tiefere Temperaturen von bis zu -50°C eignet sich hingegen der erste Kühlkreislauf da, wenn beispielsweise Kohlenstoffdioxid als erstes Kältemittel verwendet wird. Mit Kohlenstoffdioxid kann vorteilhaft diese vergleichsweise niedrige Temperatur ausgebildet werden kann. Für Temperaturen < 0°C, Temperaturänderungen mit großen Gradienten oder Anforderungen mit einer hohen Wärmekompensation kann daher der erste Kühlkreislauf vorteilhaft verwendet werden. Weiter kann der zweite Kühlkreislauf zur Verflüssigung des ersten Kältemittels in dem ersten Kühlkreislauf genutzt werden. In diesem Fall wird dann der Verdichter und die Pumpe gleichzeitig betrieben werden. Beispielsweise kann eine Vorlauftemperatur des Wärmeträgermediums 5 K bis 10 K niedriger als eine für eine Verflüssigung des ersten Kältemittels erforderliche Temperatur sein. Wie sich gezeigt hat, kann durch den Betrieb des zweiten Kühlkreislaufs eine räumliche Verteilung von klimatischen- und Temperaturbedingungen besonders homogen und stabil ausgebildet werden.

Eine Drehzahl des Verdichters und/oder der Pumpe kann geregelt werden. Der Verdichter und/oder die Pumpe kann jeweils mit einem Frequenzumrichter ausgebildet sein, welcher eine Drehzahlanpassung des Verdichters bzw. der Pumpe erlaubt. Eine Regelung kann mit einem PID-Regler einer Regeleinrichtung der Steuervorrichtung erfolgen. Durch eine Absenkung der Drehzahl kann ein Massenstrom des ersten Kältemittels bzw. des zweiten Kältemittels in einem Teillast-Betriebszustand des jeweiligen Kühlkreislaufs verringert und so eine Effizienz der jeweiligen Kühlleistung in diesem Betriebszustand weiter gesteigert werden. Weiter ermöglicht eine Drehzahlregelung des Verdichters ein Anheben und Absenken der Drehzahl des Verdichters durch die Steuervorrichtung derart, dass ein Sauggasdruck auf einer Niederdruckseite des ersten Kühlkreislaufs veränderbar ist und so in einer gewünschten Weise angepasst werden kann.

Der erste Kühlkreislauf kann in einem thermodynamisch unterkritischen oder transkritischem Betriebszustand betrieben werden. Je nach Kühllast-Anforderung innerhalb des Prüfraums kann der Betriebszustand mittels der Steuervorrichtung entsprechend verändert werden. Bei dem unterkritischen Betrieb des ersten Kühlkreislaufs erfolgt eine Verflüssigung des ersten Kältemittels im Gaskühler bzw. Enthitzer und/oder im Kaskaden-Wärmeübertrager unterhalb des kritischen Punktes des ersten Kältemittels sowie eine Entspannung am Expansionsventil und eine Umwandlung in die gasförmige Phase oder Nassdampf. Zumindest im unterkritischen Betriebszustand oder auch bei niedrigen Umgebungstemperaturen kann der Verdichter und die Pumpe betrieben werden. Der unterkritische Betriebszustand des ersten Kühlkreislaufs entspricht einem Teillast-Betrieb. Beim transkritischen Betriebszustand zirkuliert das erste Kältemittel im ersten Kühlkreislauf im Wesentlichen im gasförmigen Zustand. Das heißt eine Temperaturdifferenz ist soweit vermindert, dass das erste Kältemittel nicht im Gaskühler oder im Kaskaden-Wärmeübertrager verflüssigt wird. Auch wird im transkritischen Betriebszustand ein Druck oberhalb des kritischen Punkts des ersten Kältemittels am Gaskühler bzw. Kaskaden-Wärmeübertrager erreicht. Wenn beispielsweise eine hohe Kühllast-Anforderung vorliegt, kann der Kühlkreislauf transkritisch betrieben werden. Für den Fall, dass eine geringe Kühllast-Anforderung innerhalb des Prüfraums vorliegt, beispielsweise wenn eine Temperatur konstant gehalten werden soll, oder niedrige Umgebungstemperaturen vorliegen, kann der Kühlkreislauf unterkritisch betrieben werden.

In dem ersten Kühlkreislauf kann ein Bypass mit zumindest einem Bypass-Expansionsventil ausgebildet sein, wobei der Bypass über den Wärmeübertrager verläuft und in Strömungsrichtung nach dem Gaskühler oder dem Kaskasden-Wärmeübertrager und vor dem Expansionsventil an der Hochdruckseite des ersten Kühlkreislaufs sowie nach dem Wärmeübertrager und vor dem Verdichter an eine Niederdruckseite des ersten Kühlkreislaufs angeschlossen sein kann, wobei die Temperatur in dem Prüfraum derart geregelt werden kann, dass über das Bypass-Expansionsventil erstes Kältemittel in den Wärmeübertrager dosiert werden kann. Der Bypass des ersten Kühlkreislaufs ist insbesondere dann vorteilhaft nutzbar, wenn eine hohe Kühllast-Anforderung vorliegt.

Mittels eines Entfeuchterbypasses, des ersten Kühlkreislaufs mit einem Entfeuchter-Expansionsventil, oder des zweiten Kühlkreislaufs mit einer Entfeuchter-Ventileinrichtung, vorzugsweise einem Entfeuchter-Drei-Wege-Ventil, und mit einem Entfeuchter-Wärmeübertrager in dem Prüfraum, kann Luft in dem Prüfraum entfeuchtet werden. Diese Entfeuchtung kann zu einem bestimmten Zeitpunkt eines durchgeführten Prüfzyklus erfolgen, insbesondere immer dann, wenn eine Temperatur in dem Prüfraum in einem Bereich von > 0 bis < 100°C ausgebildet ist. Ist eine Temperatur unterhalb oder oberhalb dieses Bereichs innerhalb des Prüfraums ausgebildet, kann sich kein Wasser in der flüssigen Phase an dem Entfeuchter-Wärmeübertrager niederschlagen, sodass in diesen Bereichen eine Funktion des Entfeuchterbypasses nicht gegeben ist. Demnach kann der erste Kühlkreislauf der Kühleinrichtung so beschaffen sein, dass im Rahmen eines Prüfzyklus die Temperatur von -20°C bis +180°C innerhalb des Prüfraums ausgebildet werden kann, wobei die Entfeuchtung der Luft mittels des Entfeuchterbypasses nur in einem Teilbereich dieses Temperaturbereichs durchgeführt wird. Die Entfeuchtung verläuft dann derart, dass mit dem Entfeuchter-Expansionsventil das erste Kältemittel von der Hochdruckseite des ersten Kühlkreislaufs in eine Niederdruckseite des ersten Kühlkreislaufs dosiert wird. Dabei kommt es zu einer Abkühlung des Entfeuchter-Wärmeübertragers, welcher in einer Strömungsrichtung des ersten Kältemittels nachfolgend dem Entfeuchter-Expansionsventil in dem Entfeuchterbypass angeordnet ist. Die Steuervorrichtung kann nun das erste Kältemittel so über das Entfeuchter-Expansionsventil dosieren, dass eine gewünschte Temperaturdifferenz zwischen der Temperatur der Luft in dem Prüfraum und der Temperatur des Entfeuchter-Wärmeübertragers erzielt wird. Diese Temperaturdifferenz kann dabei so gewählt werden, dass es zu einer Kondensation von Wasser der Luft des Prüfraums an dem Entfeuchter-Wärmeübertrager kommt. Hierdurch ist es möglich eine gezielte Entfeuchtung der Luft des Prüfraums im Wesentlichen unabhängig von einer Ausbildung einer Temperatur in dem Prüfraum vorzunehmen. So kann das Expansionsventil und das Entfeuchter-Expansionsventil voneinander unabhängig mittels der Steuervorrichtung gesteuert werden. Eine Absenkung einer Temperatur in dem Prüfraum kann dann beispielsweise von einer mehr oder weniger starken Entfeuchtung begleitet sein, wodurch eine relative Luftfeuchtigkeit genauer einstellbar bzw. regelbar wird. Insgesamt kann so mit nur wenigen Bauteilen ein klimatischer Prüfzyklus wesentlich genauer mit einer kompakt aufgebauten Prüfkammer durchgeführt werden.

Der Entfeuchterbypass kann in Strömungsrichtung nach dem Gaskühler oder dem Kaskaden-Wärmeübertrager und vor dem Expansionsventil an einer Hochdruckseite des Kühlkreislaufs sowie nach dem Wärmeübertrager und vor dem Verdichter an einer Niederdruckseite des ersten Kühlkreislaufs angeschlossen sein, wobei über das Entfeuchter-Expansionsventil Kältemittel von der Hochdruckseite in die Niederdruckseite dosiert werden kann, derart, dass der Entfeuchter-Wärmeübertrager gekühlt werden kann. Optional kann auch vorgesehen sein, dass der Entfeuchterbypass an dem zweiten Kühlkreislauf angeschlossen ist bzw. von diesem ausgebildet wird. Der Entfeuchterbypass kann dann an einem Vorlauf des zweiten Kühlkreislaufs vor dem Kaskaden-Wärmeübertrager und an einem Rücklauf des zweiten Kühlkreislaufs nach dem Kaskaden-Wärmeübertrager und vor der Pumpe angeschlossen sein.

Mittels der Temperiervorrichtung kann eine relative Luftfeuchtigkeit in einem Bereich von 10 % bis 95 %, bevorzugt von 5 % bis 99 %, bei einer Temperatur in einem Temperaturbereich von +10 °C bis +90°C, bevorzugt von +5 °C bis +98 °C, innerhalb des Prüfraums ausgebildet werden.

In dem ersten Kühlkreislauf kann ein Regelbypass mit zumindest einem Regel-Expansionsventil ausgebildet sein, wobei der Regelbypass in Strömungsrichtung nach dem Gaskühler und vor dem Expansionsventil an der Hochdruckseite des ersten Kühlkreislaufs sowie dem Wärmeübertrager und vor dem Verdichter an eine Niederdruckseite des ersten Kühlkreislaufs angeschlossen sein kann, wobei eine Sauggastemperatur und/oder ein Sauggasdruck des ersten Kältemittels auf der Niederdruckseite des ersten Kühlkreislaufs vor dem Verdichter derart geregelt werden kann, dass über das Regel-Expansionsventil erstes Kältemittel in die Niederdruckseite dosiert werden kann. Optional kann vorgesehen sein, dass der Regelbypass in Strömungsrichtung nach dem Kaskaden-Wärmeübertrager in dem ersten Kühlkreislauf an die Hochdruckseite angeschlossen ist. Mittels des Regel-Expansionsventils kann so die Sauggastemperatur und/oder der Saugdruck vor dem Verdichter derart beeinflusst werden, dass sich eine Verdichtungsendtemperatur des Verdichters innerhalb eines für den Verdichter vorgesehenen Betriebsbereichs befindet. So kann eine Sauggastemperatur des Verdichters besonders stark ansteigen, wenn eine Temperatur in dem Prüfraum von beispielsweise +180°C auf eine niedrige Temperatur abgesenkt werden soll. Da sich der Wärmeübertrager im Prüfraum befindet, kann bei besonders hohen Temperaturen im Prüfraum von beispielsweise +180°C das erste Kältemittel mit dieser Temperatur aus dem Wärmeübertrager zu dem Verdichter strömen. Bevor das stark überhitzte erste Kältemittel dem Verdichter zugeführt wird, kann es durch das über das Regel-Expansionsventil dosierte erste Kältemittel abgekühlt werden.

In dem ersten Kühlkreislauf kann ein weiterer Regelbypass mit zumindest einem weiteren Regel-Expansionsventil ausgebildet sein, wobei der weitere Regelbypass in Strömungsrichtung nach dem Verdichter und vor dem Gaskühler an der Hochdruckseite des ersten Kühlkreislaufs sowie nach dem Wärmeübertrager und vor dem Verdichter an einer Niederdruckseite des ersten Kühlkreislaufs angeschlossen sein kann, wobei eine Sauggastemperatur und/oder ein Sauggasdruck des ersten Kältemittels auf der Niederdruckseite des ersten Kühlkreislaufs vor dem Verdichter derart geregelt werden kann, dass über das weitere Regel-Expansionsventil erstes Kältemittel in die Niederdruckseite dosiert werden kann. Demnach kann der weitere Regelbypass so ausgebildet sein, dass über das weitere Regel-Expansionsventil das erste Kältemittel von der Hochdruckseite auf die Niederdruckseite geleitet werden kann. Das erste Kältemittel kann dabei überhitzt bzw. gasförmig sein. Ein Einleiten von überhitzten ersten Kältemittel von der Hochdruckseite auf die Niederdruckseite mittels des weiteren Regelbypasses ist insbesondere dann vorteilhaft, wenn der erste Kühlkreislauf in einem lastfreien Betriebszustand betrieben wird. Da dann das Expansionsventil nur wenig oder selten geöffnet wird, besteht die Gefahr, dass ein Saugdruck vor dem Verdichter zu weit absinkt. Bei der Verwendung von Kohlenstoffdioxid als erstes Kältemittel kann bei einem Druck unterhalb von 5,16 bar absolut Trockeneis entstehen, welches einen sicheren Betrieb des ersten Kühlkreislauf stören und gegebenenfalls den Verdichter beschädigen könnte. Da über den weiteren Regelbypass unmittelbar nachfolgend dem Verdichter stark überhitztes erstes Kältemittel vor den Verdichter geleitet werden kann, kann wirkungsvoll eine Bildung von Trockeneis verhindert werden. Darüber hinaus ist es auch möglich, über den weiteren Regelbypass eine Druckdifferenz zwischen der Hochdruckseite und der Niederdruckseite des ersten Kühlkreislaufs auszugleichen, beispielsweise wenn die Kühleinrichtung nicht in Betrieb ist und dann die Gefahr besteht, dass infolge eines Temperaturausgleichs mit einer Umgebung erstes Kältemittel erwärmt wird und sich ein unerwünscht hoher Druck in dem ersten Kühlkreislauf einstellt.

Mittels der Temperiervorrichtung kann eine Temperatur in einem Temperaturbereich von - 40°C bis + 150°C, bevorzugt von - 50°C bis + 180°C, besonders bevorzugt von - 55°C bis + 180°C, innerhalb des Prüfraums ausgebildet werden.

Die erfindungsgemäß Prüfkammer, insbesondere Klimakammer zur Konditionierung von Luft, umfasst einen gegenüber einer Umgebung verschließbaren und temperaturisolierten Prüfraum zur Aufnahme von Prüfgut und eine Temperiervorrichtung zur Temperierung des Prüfraums, wobei mittels der Temperiervorrichtung eine Temperatur in einem Temperaturbereich von - 20°C bis + 150°C innerhalb des Prüfraums ausbildbar ist, wobei die Temperiervorrichtung eine Kühleinrichtung mit einem ersten Kühlkreislauf mit einem ersten Kältemittel, einem Wärmeübertrager im Prüfraum, einem Verdichter, einem Gaskühler, einem Kaskaden-Wärmeübertrager und einem Expansionsventil aufweist, wobei der Kaskaden-Wärmeübertrager an einer Hochdruckseite des ersten Kühlkreislaufs angeschlossen ist, wobei der Kaskaden-Wärmeübertrager mit einem zweiten Kühlkreislauf der Kühleinrichtung gekoppelt ist, wobei die Prüfkammer eine Steuervorrichtung zur Steuerung und/oder Regelung der Temperatur in dem Prüfraum aufweist, wobei das erste Kältemittel ein unfluoriertes Kältemittel, bevorzugt reines Kohlenstoffdioxid, ist, wobei der zweite Kühlkreislauf eine Pumpe und eine Flüssigkeit als ein Wärmeträgermedium umfasst. Zu den Vorteilen der erfindungsgemäßen Prüfkammer wird auf die Vorteilsbeschreibung des erfindungsgemäßen Verfahrens verwiesen.

Der Kaskaden-Wärmeübertrager kann an der Hochdruckseite des ersten Kühlkreislaufs in einer Strömungsrichtung des ersten Kältemittels nachfolgend dem Gaskühler und vor dem Expansionsventil angeschlossen sein. Beispielsweise kann dann eine Verflüssigung des ersten Kältemittels in den Kaskaden-Wärmeübertrager vorteilhaft erfolgen.

Der zweite Kühlkreislauf kann mit einem zweiten Kaskaden-Wärmeübertrager eines dritten Kühlkreislaufs der Kühleinrichtung gekoppelt sein. Der dritte Kühlkreislauf kann ein zweites Kältemittel, den zweiten Kaskaden-Wärmeübertrager, einen zweiten Verdichter, einen zweiten Gaskühler und ein zweites Expansionsventil aufweisen. Das zweite Kältemittel kann mit dem ersten Kältemittel identisch oder von diesem abweichend sein. Prinzipiell ist es aber auch möglich, dass anstelle des dritten Kühlkreislaufs andere Mittel zur Erzeugung von Kälteleistung bzw. Abführung von Wärmeenergie eingesetzt werden. Auch kann der dritte Kühlkreislauf alternativ mit einer zweiten Pumpe und einer zweiten Flüssigkeit als ein zweites Wärmeträgermedium ausgebildet sein. Wesentlich ist, dass der dritte Kühlkreislauf zum Abtransport von Wärmeenergie von dem zweiten Kühlkreislauf dienen kann.

Ein Flüssigkeitsbypass des zweiten Kühlkreislaufs kann über den Wärmeübertrager im Prüfraum verlaufen, wobei der Wärmeübertrager mit einem ersten Übertragerkörper für den ersten Kühlkreislauf und einem zweiten Übertragerkörper für den zweiten Kühlkreislauf oder einem gemeinsamen Übertragerkörper für den ersten Kühlkreislauf und den zweiten Kühlkreislauf ausgebildet sein kann. Wenn der Flüssigkeitsbypass des zweiten Kühlkreislaufs durch den Prüfraum verläuft, kann der Prüfraum ebenfalls von dem zweiten Kühlkreislauf temperiert werden. Dabei kann vorgesehen sein, dass der Wärmeübertrager voneinander separierte Übertragerkörper für die jeweiligen Kühlkreisläufe oder einen gemeinsamen Übertragerkörper aufweist. Unter einem Übertragerkörper wird hier ein Korpus verstanden, der beispielsweise einteilig oder mehrteilig ausgebildet sein kann und von einem Kältemittel durchströmt wird. Hierunter fallen auch Leitungsanordnungen, die mit Lamellen zur besseren Wärmeübertragung versehen sind. Die Lamellen bilden dann zusammen mit der Leitungsanordnung bzw. den Leitungsanordnungen den Übertragerkörper aus. Der Übertragerkörper weist eine zur Wärmeübertragung wirksame Fläche auf.

Die Temperiervorrichtung kann eine Heizeinrichtung mit einer Heizung und einem Heiz-Wärmeübertrager in dem Prüfraum aufweisen. Die Heizeinrichtung kann beispielsweise eine elektrische Widerstandsheizung sein, die den Heiz-Wärmeübertrager beheizt, derart, dass über den Heiz-Wärmeübertrager eine Temperaturerhöhung im Prüfraum ermöglicht wird. Wenn der Wärmeübertrager und der Heiz-Wärmeübertrager mittels der Steuervorrichtung zur Kühlung oder Erwärmung der im Prüfraum umgewälzten Luft gezielt gesteuert bzw. geregelt werden können, kann mittels der Temperiervorrichtung dann innerhalb des Prüfraums eine Temperatur in den vorstehend angegebenen Temperaturbereichen ausgebildet werden.

Weitere Ausführungsformen einer Prüfkammer ergeben sich aus den Merkmalsbeschreibungen der auf den Verfahrensanspruch 1 rückbezogenen Unteransprüche.

Das erfindungsgemäße System umfasst eine erfindungsgemäße Prüfkammer und zumindest eine weitere Prüfkammer, die einen gegenüber einer Umgebung verschließbaren und temperaturisolierten weiteren Prüfraum zur Aufnahme von Prüfgut umfasst und eine weitere Temperiervorrichtung zur Temperierung des weiteren Prüfraums, wobei mittels der weiteren Temperiervorrichtung eine Temperatur in einem Temperaturbereich von - 20°C bis + 150°C innerhalb des weiteren Prüfraums ausbildbar ist, wobei die weitere Temperiervorrichtung eine weitere Kühleinrichtung mit einem weiteren ersten Kühlkreislauf mit einem weiteren ersten Kältemittel, einem weiteren Wärmeübertrager im weiteren Prüfraum, einem weiteren Verdichter, einem weiteren Gaskühler, einem weiteren Kaskaden-Wärmeübertrager und einem weiteren Expansionsventil aufweist, wobei der weitere Kaskaden-Wärmeübertrager an einer Hochdruckseite des weiteren ersten Kühlkreislaufs angeschlossen ist, wobei der weitere Kaskaden-Wärmeübertrager mit dem zweiten Kühlkreislauf der Prüfkammer gekoppelt ist, wobei die weitere Prüfkammer eine weitere Steuervorrichtung zur Steuerung und/oder Regelung der Temperatur in dem weiteren Prüfraum aufweist.

Demnach ist das erfindungsgemäße System zumindest aus der erfindungsgemäßen Prüfkammer, die den zweiten Kühlkreislauf umfasst und der weiteren Prüfkammer ausgebildet. Die weitere Prüfkammer ist über den in dem weiteren ersten Kühlkreislauf integrierten weiteren Kaskaden-Wärmeübertrager an den zweiten Kühlkreislauf der Prüfkammer angeschlossen bzw. gekoppelt. Der weitere Kaskaden-Wärmeübertrager ist dann mit dem zweiten Kühlkreislauf der Prüfkammer parallelgeschaltet. Dies kann dadurch erfolgen, dass der weitere Kaskaden-Wärmeübertrager über einen weiteren Bypass des zweiten Kühlkreislaufs an einen Vorlauf und einen Rücklauf des zweiten Kühlkreislaufs angeschlossen ist. Dabei kann vorgesehen sein, dass der weitere Kaskaden-Wärmeübertrager mittels einer weiteren Bypass-Ventileinrichtung, vorzugsweise einem weiteren Bypass-Drei-Wege-Ventil, mit dem Wärmeträgermedium geregelt versorgt werden kann. Vorteilhaft kann so von der weiteren Prüfkammer der bereits vorhandene zweite Kühlkreislauf, wie auch schon mit der Prüfkammer, genutzt werden. Es ist dann nicht mehr erforderlich für die weitere Prüfkammer einen ausschließlich mit der weiteren Prüfkammer nutzbaren zweiten Kühlkreislauf vorzusehen. Das System kann darüber hinaus auch drei oder mehr Prüfkammern umfassen, wobei dann alle weiteren Prüfkammern an den zweiten Kühlkreislauf der Prüfkammer angeschlossen sein können. Insgesamt wird es so möglich die Vorteile des zweiten Kühlkreislaufs auch für die weitere Prüfkammer zu nutzen. Ein Betrieb dieser Prüfkammern kann so besonders effizient erfolgen.

Weitere Ausführungsformen eines Systems ergeben sich aus den Merkmalsbeschreibungen der auf den Vorrichtungsanspruch 16 rückbezogenen Unteransprüche.

Nachfolgend wird eine bevorzugte Ausführungsform der Erfindung unter Bezugnahme auf die beigefügten Zeichnungen näher erläutert.

Es zeigen:
- **Fig. 1**: eine schematische Darstellung einer ersten Ausführungsform einer Temperiervorrichtung;
- **Fig. 2**: eine schematische Darstellung einer zweiten Ausführungsform einer Temperiervorrichtung;
- **Fig. 3**: eine schematische Darstellung einer dritten Ausführungsform einer Temperiervorrichtung;
- **Fig. 4**: eine schematische Darstellung einer vierten Ausführungsform einer Temperiervorrichtung.

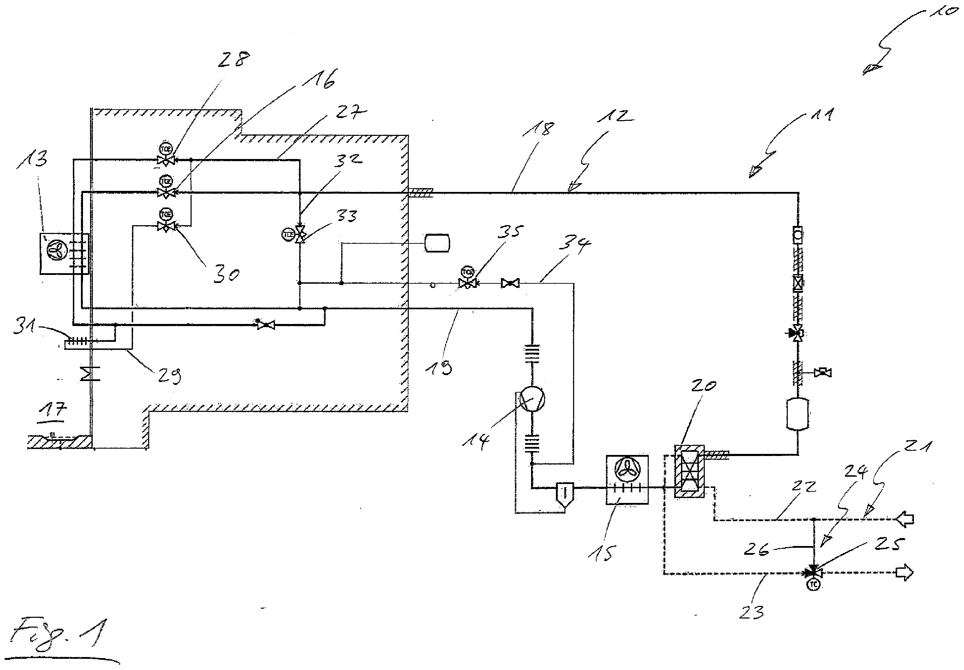

Die **Fig. 1** zeigt eine mögliche Ausführungsform einer Temperiervorrichtung 10 einer hier nicht näher dargestellten Prüfkammer. Die Temperiervorrichtung 10 weist eine Kühleinrichtung 11 auf, die ihrerseits einen ersten Kühlkreislauf 12 mit Kohlenstoffdioxid als einem ersten Kältemittel, einem Wärmeübertrager 13, einem Verdichter 14, einem Gaskühler 15 und einem Expansionsventil 16 gebildet ist. Der Gaskühler 15 ist hier in Art eines Wärmeübertragers bzw. Kondensators ausgebildet und über ein Wärmeträgermedium, wie beispielsweise Luft oder Wasser, gekühlt. Der Wärmeübertrager 13 ist in einem hier nicht dargestellten Luftbehandlungskanal eines Prüfraums 17 der Prüfkammer angeordnet derart, dass Luft in dem Prüfraum 17, die über den Luftbehandlungskanal umgewälzt wird, mittels des Wärmeübetragers 13 gekühlt werden kann. Weiter weist der erste Kühlkreislauf 12 eine Hochdruckseite 18 und eine Niederdruckseite 19 auf. In der Niederdruckseite 19 ist ein Druck des ersten Kältemittels vergleichsweise niedriger als in der Hochdruckseite 18. Der erste Kühlkreislauf 12 umfasst weiter einen Kaskaden-Wärmeübertrager 20, der in einer Strömungsrichtung des ersten Kältemittels nachfolgend dem Gaskühler 15 und vor dem Expansionsventil 16 an den ersten Kühlkreislauf 12 angeschlossen ist.

Die Kühleinrichtung 11 weist darüber hinaus einen zweiten Kühlkreislauf 21 auf, der ebenfalls an den Kaskaden-Wärmeübertrager 20 gekoppelt ist. Der zweite Kühlkreislauf 21 weist eine hier nicht näher dargestellte Pumpe und eine Flüssigkeit als ein in dem zweiten Kühlkreislauf 21 zirkulierbares Wärmeträgermedium auf. Der zweite Kühlkreislauf 21 ist dann mit einem Vorlauf 22 und einem Rücklauf 23 an den Kaskaden-Wärmeübertrager 20 angeschlossen. Weiter ist im zweiten Kühlkreislauf 21 eine Ventileinrichtung 24 vorgesehen, die hier durch ein Drei-Wege-Ventil 25 gebildet ist. Die Ventileinrichtung 24 überbrückt mit einer Leitung 26 den Kaskaden-Wärmeübertrager 20. Von dem Drei-Wege-Ventil 25 kann so über die Leitung 26 das Wärmeträgermedium an dem Kaskaden-Wärmeübertrager 20 vorbeigeleitet werden, so dass vorteilhaft eine Regelung eines Massenstroms des Wärmeträgermediums durch den Kaskaden-Wärmeübertrager 20 geregelt werden kann.

Weiter ist im ersten Kühlkreislauf 12 ein Bypass 27 mit einem Bypass-Expansionsventil 28 ausgebildet. Der Bypass 27 verläuft dabei über den Wärmeübertrager 13 und ist in Strömungsrichtung des ersten Kältemittels nach dem Kaskaden-Wärmeübertrager 20 und vor dem Expansionsventil 16 an der Hochdruckseite 18 sowie nach dem Wärmeübertrager 13 und vor dem Verdichter 14 an die Niederdruckseite 19 angeschlossen. Der erste Kühlkreislauf 12 weist darüber hinaus einen Entfeuchterbypass 29 mit einem Entfeuchter-Expansionsventil 30 und einem Entfeuchter-Wärmeübertrager 31 in dem Prüfraum 17 auf. Über den Entfeuchter-Wärmeübertrager 31 kann eine Entfeuchtung von der in dem Prüfraum 17 befindlichen Luft erfolgen.

Darüber hinaus ist der erste Kühlkreislauf 12 mit einem Regelbypass 32 mit einem Regel-Expansionsventil 33 und einem weiteren Regelbypass 34 mit einem weiteren Regel-Expansionsventil 35 ausgebildet.

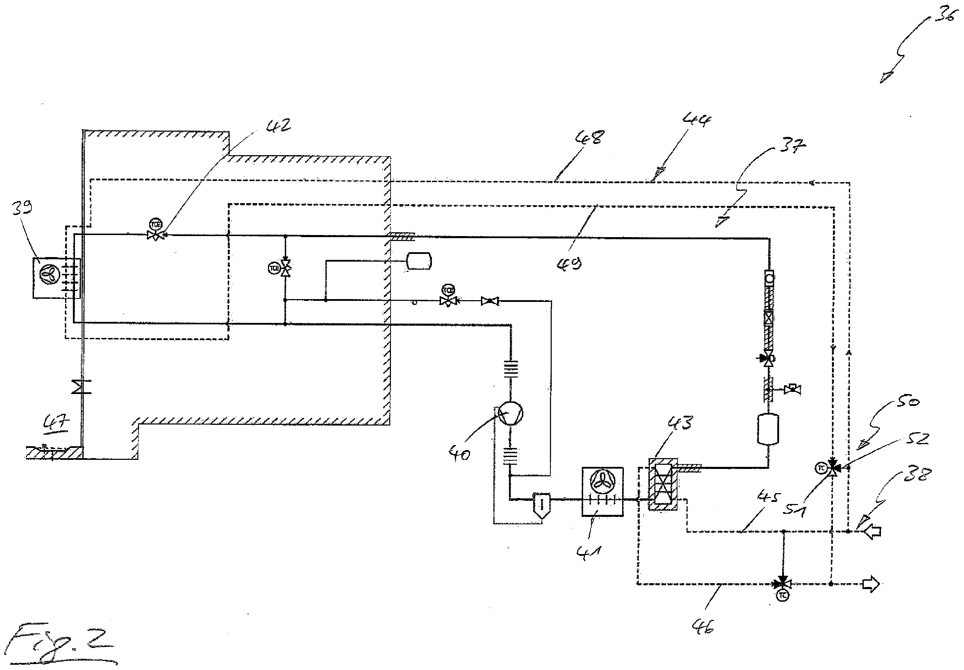

Die **Fig. 2** zeigt eine Ausführungsform einer Temperiervorrichtung 36 mit einem ersten Kühlkreislauf 37 und einem zweiten Kühlkreislauf 38. Der erste Kühlkreislauf 37 umfasst hier einen Wärmeübertrager 39, einen Verdichter 40, einen Gaskühler 41, und ein Expansionsventil 42. Weiter ist der erste Kühlkreislauf 37 über einen Kaskaden-Wärmeübertrager 43 an den zweiten Kühlkreislauf 38 gekoppelt. Im Unterscheid zum zweiten Kühlkreislauf 38 aus **Fig. 1** ist hier der zweite Kühlkreislauf 38 mit einem Flüssigkeitsbypass 44 ausgebildet, der an einen Vorlauf 45 und einen Rücklauf 46 des zweiten Kühlkreislaufs 48 angeschlossen ist. Der Flüssigkeitsbypass 44 verläuft über den Wärmeübertrager 39, der in einem Prüfraum 47 angeordnet ist. So kann eine Temperatur in dem Prüfraum 47 wahlweise mittels des ersten Kühlkreislaufs 37 und/oder des zweiten Kühlkreislaufs 38 ausgebildet werden. Zwischen einem Vorlauf 48 und einem Rücklauf 49 des Flüssigkeitsbypass 44 ist eine Bypass-Ventileinrichtung 50, die durch ein Bypass-Drei-Wege-Ventil gebildet ist, vorgesehen. Das Bypass-Drei-Wege-Ventil 51 ist in dem Rücklauf 49 angeordnet und über eine Leitung 52 mit dem Vorlauf 48 verbunden, so dass über die Leitung 52 Wärmerträgermedium an dem Wärmeübertrager 39 vorbei geleitet und so einen Massenstrom an Wärmeträgermedium in den Wärmeübertrager 39 geregelt werden kann.

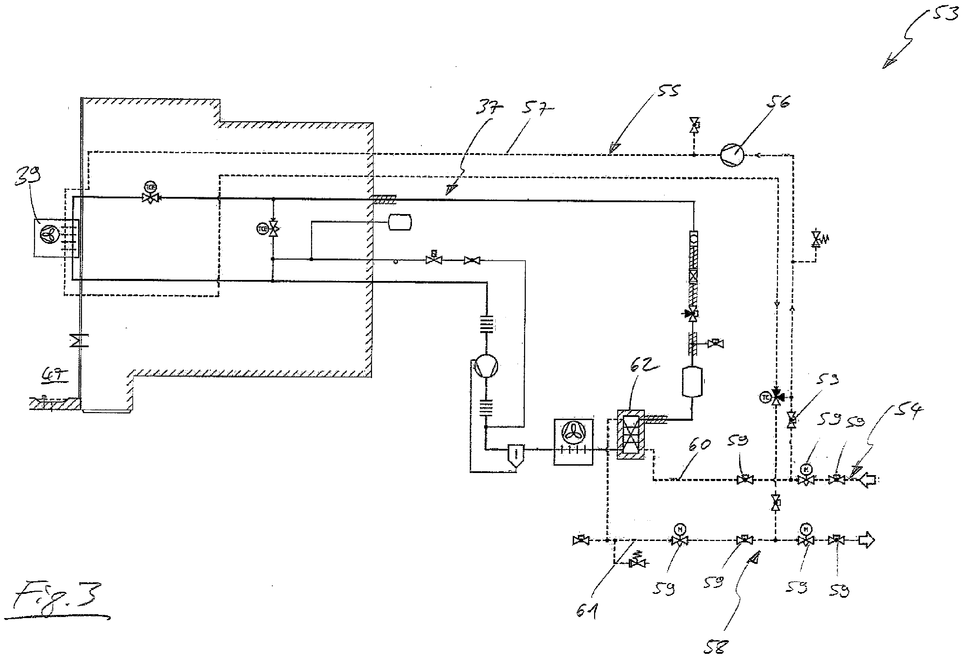

Die **Fig. 3** zeigt eine Temperiervorrichtung 53, die im Unterschied zur Temperiervorrichtung aus **Fig. 2** einen zweiten Kühlkreislauf 54 aufweist, der einen Flüssigkeitsbypass 55 mit einer weiteren Pumpe 56 aufweist. Die weitere Pumpe 56 ist in einem Vorlauf 57 des Flüssigkeitsbypass 55 angeordnet. Der zweite Kühlkreislauf 54 weist hier eine Ventileinrichtung 58 auf, die aus einer Mehrzahl von schaltbaren Ventilen 59 in einem Vorlauf 60 und einem Rücklauf 61 des zweiten Kühlkreislaufs 54 gebildet ist. Eine hier nicht dargestellte Steuervorrichtung der Temperiervorrichtung 53 kann die Ventile 59 so schalten bzw. drosseln, dass sich ein gewünschter Massenstrom an Wärmeträgermedium an einem Kaskaden-Wärmeübertrager 62 einstellt.

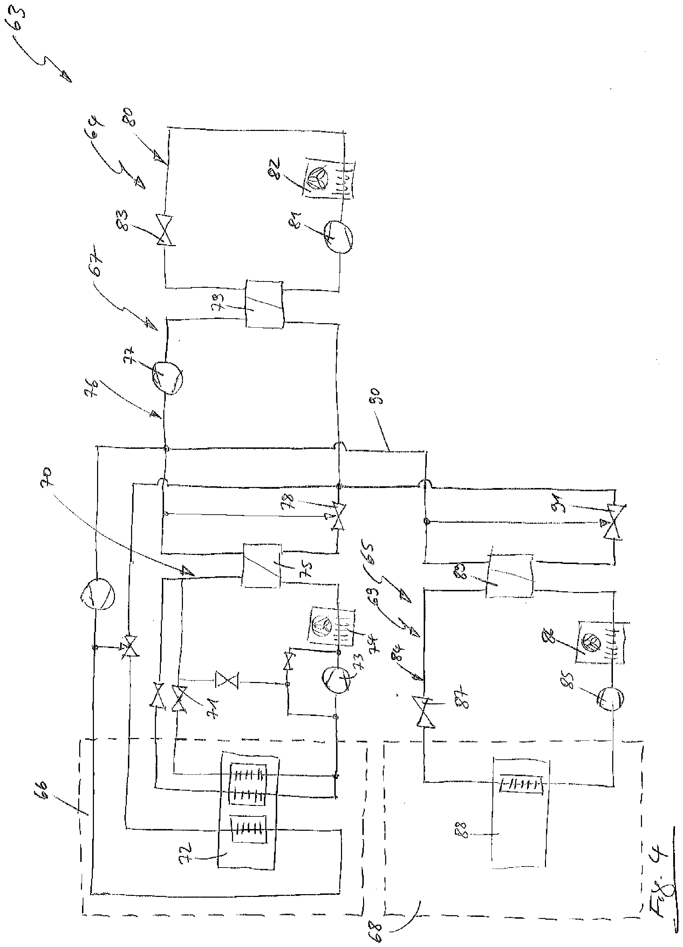

Die **Fig. 4** zeigt ein System 63 mit einer Temperiervorrichtung 64 einer nicht näher dargestellten Prüfkammer und einer weiteren Temperiervorrichtung 65 einer ebenfalls nicht näher dargestellten weiteren Prüfkammer. Die Prüfkammer weist einen hier schematisch dargestellten Prüfraum 66 und eine Kühleinrichtung 67 sowie die weitere Prüfkammer einen weiteren Prüfraum 68 und eine weitere Kühleinrichtung 69 auf. Die Kühleinrichtung 67 umfasst einen ersten Kühlkreislauf 70 mit einem Expansionsventil 71, einem Wärmeübertrager 72 in den Prüfraum 66, einem Verdichter 73, einem Gaskühler 74 und einen Kaskaden-Wärmeübertrager 75. Ein Kältemittel des ersten Kühlkreislaufs ist Kohlenstoffdioxid. Die Kühleinrichtung 67 weist weiterhin einen zweiten Kühlkreislauf 76 auf, der an den Kaskaden-Wärmeübertrager 75 angeschlossen ist und eine Pumpe 77 sowie ein Drei-Wege-Ventil 78 zur Regelung eines Massenstroms eines Wärmeträgermediums des zweiten Kühlkreislaufs 76 auf. In dem zweiten Kühlkreislauf 76 ist weiter ein zweiter Kaskaden-Wärmeübertrager 79 angeschlossen. Dieser ist wiederum an einen dritten Kühlkreislauf 80 der Kühleinrichtung 67 gekoppelt. Der dritte Kühlkreislauf 80 umfasst einen zweiten Verdichter 81, einen zweiten Gaskühler 81 und ein zweites Expansionsventil 83. Als ein Kältemittel ist hier ebenfalls ein unfluoriertes Kältemittel, beispielsweise Kohlenstoffdioxid, vorgesehen, Prinzipiell ist es jedoch auch möglich anstelle des dritten Kühlkreislaufs 80 andere Mittel zur Kälteerzeugung zu nutzen.

Die weitere Kühleinrichtung 69 weist einen weiteren ersten Kühlkreislauf 84 auf, der seinerseits einen weiteren Verdichter 85, einen weiteren Gaskühler 86, ein weiteres Expansionsventil 87, einen weiteren Wärmeübertrager 88 im weiteren Prüfraum 68 und einen weiteren Kaskaden-Wärmeübertrager 89 umfasst. Ein Kältemittel ist hier ein unfluoriertes Kältemittel, beispielsweise reines Kohlenstoffdioxid. Der weitere Kaskaden-Wärmeübertrager 89 ist über einen weiteren Bypass 90 an den zweiten Kühlkreislauf 76 angeschlossen. In dem weiteren Bypass 90 ist ein weiteres Drei-Wege-Ventil 91 vorgesehen über das ein Massenstrom des Wärmeträgermediums durch den weiteren Kaskaden-Wärmeübertrager 89 geregelt werden kann. Prinzipiell können, wie die weitere Prüfkammer über den weiteren Bypass 90, noch weitere, hier nicht dargestellte Prüfkammern, mit einem jeweils eigens dafür vorgesehenen Bypass parallel an den zweiten Kühlkreislauf 76 angeschlossen sein. Der zweite Kühlkreislauf 76 wird so für eine Mehrzahl von Prüfkammern nutzbar.

## Patentansprüche

1. Verfahren zur Konditionierung von Luft in einem gegenüber einer Umgebung verschließbaren und temperaturisolierten Prüfraum (17, 47, 66) einer Prüfkammer, insbesondere Klimakammer, zur Aufnahme von Prüfgut, wobei mittels einer Kühleinrichtung (11, 67) einer Temperiervorrichtung (10, 36, 53, 64) der Prüfkammer, mit einem ersten Kühlkreislauf (12, 37, 70) mit einem ersten Kältemittel, einem Wärmeübertrager (13, 39, 72) im Prüfraum, einem Verdichter (14, 40, 73), einem Gaskühler (15, 41, 74), einem Kaskaden-Wärmeübertrager (20, 43, 62, 75) und einem Expansionsventil (16, 42, 71) eine Temperatur in einem Temperaturbereich von - 20 °C bis +150 °C innerhalb des Prüfraums ausgebildet wird, wobei der Kaskaden-Wärmeübertrager an einer Hochdruckseite (18) des ersten Kühlkreislaufs angeschlossen ist, wobei der Kaskaden-Wärmeübertrager mit einem zweiten Kühlkreislauf (21, 38, 54, 76) der Kühleinrichtung gekoppelt ist, wobei die Temperatur in dem Prüfraum mittels einer Steuervorrichtung der Prüfkammer gesteuert und/oder geregelt wird,
**dadurch gekennzeichnet,**
**dass** das erste Kältemittel ein unfluoriertes Kältemittel, bevorzugt reines Kohlenstoffdioxid (CO₂), ist, wobei der zweite Kühlkreislauf eine Pumpe (77) und eine Flüssigkeit als ein Wärmeträgermedium umfasst, wobei die Temperatur innerhalb des Prüfraums ausgebildet wird.

2. Verfahren nach Anspruch 1,
**dadurch gekennzeichnet,**
**dass** das Wärmeträgermedium in dem zweiten Kühlkreislauf (21, 38, 54, 76) ohne Phasenwechsel zirkuliert wird.

3. Verfahren nach Anspruch 1 oder 2,
**dadurch gekennzeichnet,**
**dass** der zweite Kühlkreislauf (21, 38, 54, 76) zwischen einem Vorlauf (22, 45, 60) und einem Rücklauf (23, 46, 61) des zweiten Kühlkreislaufs eine Ventileinrichtung (24, 58), vorzugsweise ein Drei-Wege-Ventil (25, 78), aufweist, welches den Kaskaden-Wärmeübertrager (20, 43, 62, 75) überbrückt, wobei eine Regeleinrichtung der Steuervorrichtung einen Massenstrom an Wärmeträgermedium durch den Kaskaden-Wärmeübertrager mittels der Ventileinrichtung regelt.

4. Verfahren nach einem der vorangehenden Ansprüche,
**dadurch gekennzeichnet,**
**dass** in dem zweiten Kühlkreislauf (38, 54, 76) ein Flüssigkeitsbypass (44, 55) zwischen einem Vorlauf (45, 60) und einem Rücklauf (46, 61) des zweiten Kühlkreislaufs ausgebildet ist, wobei der Flüssigkeitsbypass über den Wärmeübertrager (39, 72) verläuft, wobei die Temperatur in dem Prüfraum (47, 66) mit dem ersten Kühlkreislauf (37, 70) und/oder dem zweiten Kühlkreislauf ausgebildet wird.

5. Verfahren nach Anspruch 4,
**dadurch gekennzeichnet,**
**dass** der Flüssigkeitsbypass (44, 55) zwischen einem Vorlauf (45, 60) und einem Rücklauf (46, 61) des Flüssigkeitsbypasses eine Bypass-Ventileinrichtung (50), vorzugsweise ein Bypass-Drei-Wege-Ventil 51, 78), aufweist, welches den Wärmeübertrager (39, 72) überbrückt, wobei eine Regeleinrichtung der Steuervorrichtung einen Massenstrom an Wärmeträgermedium durch den Wärmeübertrager mittels der Bypass-Ventileinrichtung regelt.

6. Verfahren nach Anspruch 4 oder 5,
**dadurch gekennzeichnet,**
**dass** in dem Flüssigkeitsbypass (55) eine weitere Pumpe (56) angeordnet ist, mittels der das Wärmeträgermedium gefördert wird.

7. Verfahren nach einem der vorangehenden Ansprüche,
**dadurch gekennzeichnet,**
**dass** das Expansionsventil (16, 42, 71, 83) und/oder ein Drei-Wege-Ventil (25, 51, 78, 91) mit jeweils einem PID-Regler einer Regeleinrichtung der Steuervorrichtung nach einer Temperatur im Prüfraum (17, 47, 66) als Führungsgröße geregelt wird.

8. Verfahren nach einem der vorangehenden Ansprüche,
**dadurch gekennzeichnet,**
**dass** die Steuervorrichtung zumindest bei einer Temperatur > 0°C im Prüfraum (17, 47, 66) als Führungsgröße die Pumpe (77) und bei einer Temperatur < 0°C den Verdichter (14, 40, 73) betreibt.

9. Verfahren nach einem der vorangehenden Ansprüche,
**dadurch gekennzeichnet,**
**dass** eine Drehzahl des Verdichters (14, 40, 73) und/oder der Pumpe (77, 81) geregelt wird.

10. Verfahren nach einem der vorangehenden Ansprüche,
**dadurch gekennzeichnet,**
**dass** der erste Kühlkreislauf (12, 37, 70) in einem thermodynamisch unterkritischen oder transkritischen Betriebszustand betrieben wird.

11. Verfahren nach einem der vorangehenden Ansprüche,
**dadurch gekennzeichnet,**
**dass** in dem ersten Kühlkreislauf (12, 37, 70) ein Bypass (27) mit zumindest einem Bypass-Expansionsventil (28) ausgebildet ist, wobei der Bypass über den Wärmeübertrager (13, 39, 72) verläuft und in Strömungsrichtung nach dem Gaskühler (15, 41, 74) oder dem Kaskaden-Wärmeübertrager (20, 43, 62, 75) und vor dem Expansionsventil (16, 42, 71) an der Hochdruckseite (18) des ersten Kühlkreislaufs sowie nach dem Wärmeübertrager und vor dem Verdichter (14, 40, 73) an eine Niederdruckseite (19) des ersten Kühlkreislaufs angeschlossen ist, wobei die Temperatur in dem Prüfraum (17, 47, 66) derart geregelt wird, dass über das Bypass-Expansionsventil erstes Kältemittel in den Wärmeübertrager dosiert wird.

12. Verfahren nach einem der vorangehenden Ansprüche,
**dadurch gekennzeichnet,**
**dass** mittels eines Entfeuchterbypasses (29), des ersten Kühlkreislaufs (12) mit einem Entfeuchter-Expansionsventil (30), oder des zweiten Kühlkreislaufs mit einer Entfeuchter-Ventileinrichtung, vorzugsweise einem Entfeuchter-Drei-Wege-Ventil, und mit einem Entfeuchter-Wärmeübertrager (31) in dem Prüfraum (17), Luft in dem Prüfraum entfeuchtet wird.

13. Verfahren nach einem der vorangehenden Ansprüche,
**dadurch gekennzeichnet,**
**dass** in dem ersten Kühlkreislauf (12, 37, 70) ein Regelbypass (32) mit zumindest einem Regel-Expansionsventil (33) ausgebildet ist, wobei der Regelbypass in Strömungsrichtung nach dem Gaskühler (15, 41, 74) und vor dem Expansionsventil (16, 42, 71) an der Hochdruckseite (18) des ersten Kühlkreislaufs sowie nach dem Wärmeübertrager (13, 39, 72) und vor dem Verdichter (14, 40, 73) an eine Niederdruckseite (19) des ersten Kühlkreislaufs angeschlossen ist, wobei eine Sauggastemperatur und/oder ein Sauggasdruck des ersten Kältemittels auf der Niederdruckseite des ersten Kühlkreislaufs vor dem Verdichter derart geregelt wird, dass über das Regel-Expansionsventil erstes Kältemittel in die Niederdruckseite dosiert wird.

14. Verfahren nach einem der vorangehenden Ansprüche,
**dadurch gekennzeichnet,**
**dass** in dem ersten Kühlkreislauf (12, 37, 70) ein weiterer Regelbypass (34) mit zumindest einem weiteren Regel-Expansionsventil (35) ausgebildet ist, wobei der weitere Regelbypass in Strömungsrichtung nach dem Verdichter (14, 40, 73) und vor dem Gaskühler (15, 41, 74) an der Hochdruckseite (18) des ersten Kühlkreislaufs sowie nach dem Wärmeübertrager (13, 39, 72) und vor dem Verdichter (14, 40, 73) an eine Niederdruckseite (19) des ersten Kühlkreislaufs angeschlossen ist, wobei eine Sauggastemperatur und/oder ein Sauggasdruck des ersten Kältemittels auf der Niederdruckseite des ersten Kühlkreislaufs vor dem Verdichter derart geregelt wird, dass über das weitere Regel-Expansionsventil erstes Kältemittel in die Niederdruckseite dosiert wird.

15. Verfahren nach einem der vorangehenden Ansprüche,
**dadurch gekennzeichnet,**
**dass** mittels der Temperiervorrichtung (10, 36, 53, 64) eine Temperatur in einem Temperaturbereich von -40 °C bis +150 °C, bevorzugt von -50 °C bis +180 °C, innerhalb des Prüfraums (17, 47, 66) ausgebildet wird.

16. Prüfkammer, insbesondere Klimakammer zur Konditionierung von Luft, umfassend einen gegenüber einer Umgebung verschließbaren und temperaturisolierten Prüfraum (17, 47, 66) zur Aufnahme von Prüfgut und eine Temperiervorrichtung (10, 36, 53, 64) zur Temperierung des Prüfraums, wobei mittels der Temperiervorrichtung eine Temperatur in einem Temperaturbereich von -20 °C bis +150 °C innerhalb des Prüfraums ausbildbar ist, wobei die Temperiervorrichtung eine Kühleinrichtung (11, 67) mit einem ersten Kühlkreislauf (12, 37, 70) mit einem ersten Kältemittel, einem Wärmeübertrager (13, 39, 72) im Prüfraum, einem Verdichter (14, 40, 73), einem Gaskühler (15, 41, 74), einem Kaskaden-Wärmeübertrager (20, 43, 62, 75) und einem Expansionsventil (16, 42, 71) aufweist, wobei der Kaskaden-Wärmeübertrager an einer Hochdruckseite (18) des ersten Kühlkreislaufs angeschlossen ist, wobei der Kaskaden-Wärmeübertrager mit einem zweiten Kühlkreislauf (21, 38, 54, 76) der Kühleinrichtung gekoppelt ist, wobei die Prüfkammer eine Steuervorrichtung zur Steuerung und/oder Regelung der Temperatur in dem Prüfraum aufweist,
**dadurch gekennzeichnet,**
**dass** das erste Kältemittel ein unfluoriertes Kältemittel, bevorzugt reines Kohlenstoffdioxid (CO₂), ist, wobei der zweite Kühlkreislauf eine Pumpe (77) und eine Flüssigkeit als ein Wärmeträgermedium umfasst.

17. Prüfkammer nach Anspruch 16,
**dadurch gekennzeichnet,**
**dass** der Kaskaden-Wärmeübertrager (20, 43, 62, 75) an der Hochdruckseite (18) des ersten Kühlkreislaufs (12, 37, 70) in einer Strömungsrichtung des ersten Kältemittels nachfolgend dem Gaskühler (15, 41, 74) und vor dem Expansionsventil (16, 42, 71) angeschlossen ist.

18. Prüfkammer nach Anspruch 16 oder 17,
**dadurch gekennzeichnet,**
**dass** der zweite Kühlkreislauf (21, 38, 54, 76) mit einem zweiten Kaskaden-Wärmeübertrager (79) eines dritten Kühlkreislaufs (80) der Kühleinrichtung (11, 67) gekoppelt ist.

19. Prüfkammer nach einem der Ansprüche 16 bis 18,
**dadurch gekennzeichnet,**
**dass** ein Flüssigkeitsbypass (44, 55) des zweiten Kühlkreislaufs (38, 54, 76) über den Wärmeübertrager (39, 72) im Prüfraum (47, 66) verläuft, wobei der Wärmeübertrager mit einem ersten Übertragerkörper für den ersten Kühlkreislauf (37, 70) und einem zweiten Übertragerkörper für den zweiten Kühlkreislauf oder einem gemeinsamen Übertragerkörper ausgebildet ist.

20. Prüfkammer nach einem der Ansprüche 16 bis 19,
**dadurch gekennzeichnet,**
**dass** die Temperiervorrichtung (10, 36, 53, 64) eine Heizeinrichtung mit einer Heizung und einen Heiz-Wärmeübertrager in dem Prüfraum (17, 47, 66) aufweist.

21. System, umfassend eine Prüfkammer nach einem der nach einem der Ansprüche 16 bis 20 und zumindest eine weitere Prüfkammer, umfassend einen gegenüber einer Umgebung verschließbaren und temperaturisolierten weiteren Prüfraum (68) zur Aufnahme von Prüfgut, und eine weitere Temperiervorrichtung (65) zur Temperierung des weiteren Prüfraums, wobei mittels der weiteren Temperiervorrichtung eine Temperatur in einem Temperaturbereich von -20 °C bis +150 °C innerhalb des weiteren Prüfraums ausbildbar ist, wobei die weitere Temperiervorrichtung eine weitere Kühleinrichtung (69) mit einem weiteren ersten Kühlkreislauf (84) mit einem weiteren ersten Kältemittel, einem weiteren Wärmeübertrager (88) im weiteren Prüfraum, einem weiteren Verdichter (85), einem weiteren Gaskühler (86), einem weiteren Kaskaden-Wärmeübertrager (89) und einem weiteren Expansionsventil (87) aufweist, wobei der weitere Kaskaden-Wärmeübertrager an einer Hochdruckseite des weiteren ersten Kühlkreislaufs angeschlossen ist, wobei der weitere Kaskaden-Wärmeübertrager mit dem zweiten Kühlkreislauf (21, 38, 54, 76) der Prüfkammer gekoppelt ist, wobei die weitere Prüfkammer eine weitere Steuervorrichtung zur Steuerung und/oder Regelung der Temperatur in dem weiteren Prüfraum aufweist.
